# EUROPÄISCHE PATENTSCHRIFT

(11) **EP 3 368 449 B1**
(45) Veröffentlichungstag und Bekanntmachung des Hinweises auf die Patenterteilung: **04.03.2020**
(21) Anmeldenummer: 16781770.9
(22) Anmeldetag: 13.10.2016
(51) Int. Cl.: B24B 9/00

(54) **TRANSPORTBAND-MATERIAL, TRANSPORTBAND UND VORRICHTUNG MIT EINEM TRANSPORTBAND**
CONVEYOR BELT MATERIAL, CONVEYOR BELT, AND DEVICE COMPRISING A CONVEYOR BELT
MATÉRIAU POUR BANDE TRANSPORTEUSE, BANDE TRANSPORTEUSE ET DISPOSITIF MUNI D'UNE BANDE TRANSPORTEUSE

(30) Priorität: 26.10.2015 DE 102015118187
(43) Veröffentlichungstag der Anmeldung: 05.09.2018
(73) Patentinhaber: LISSMAC Maschinenbau GmbH, 88410 Bad Wurzach (DE)
(72) Erfinder: KRUMMENAUER, Stefan, 88339 Bad Waldsee-Gaisbeuren (DE)
(74) Vertreter: Otten, Roth, Dobler & Partner mbB Patentanwälte
(86) Internationale Anmeldenummer: PCT/EP2016/074536
(87) Internationale Veröffentlichungsnummer: WO 2017/071961

(56) Entgegenhaltungen:
- EP-A1- 0 057 838
- EP-A1- 0 057 838
- EP-A1- 0 919 331
- WO-A2-2006/076888
- WO-A2-2006/076888
- DE-A1- 10 056 097
- DE-A1- 10 056 097
- JP-A- H10 329 915

## Beschreibung

### Stand der Technik

Zur maschinellen Metallbearbeitung sind Arbeitsmaschinen und Arbeitsverfahren bekannt, beispielsweise für die automatisierte Trockenbearbeitung von flachen, metallischen Werkstücken.

Hierfür kommen unter anderem Maschinen zur einseitige oder beidseitigen Oberflächenbearbeitung von Metallwerkstücken beispielsweise Blechen zum Einsatz, um Schnittkonturen wie Außen- und Innenkonturen in einem Arbeitsschritt zu bearbeiten. Beispielsweise ist es bekannt, die Bearbeitung der Werkstücke mit einem angetriebenen Bearbeitungswerkzeug durchzuführen, das am Werkstück in eine Richtung auf die Werkstückoberfläche einwirkt, die quer bzw. schräg zu einer Vorschubrichtung des Werkstücks ausgerichtet ist. Die Vorschubrichtung des Werkstücks bezieht sich auf eine Förderbewegung des Werkstücks während der Bearbeitung durch das Bearbeitungswerkzeug.

Zum Stand der Technik sind die WO 2006/076888 A2, JP H10 329915 A, die DE 100 56 097 A1 und die EP 0919 331 A1 zu nennen. Die EP 0919 331 A1 offenbart eine Metallbearbeitungsvorrichtung nach dem Oberbegriff des Anspruchs 1.

In der Regel erfolgt die Förderbewegung des Werkstücks in Vorschubrichtung durch entsprechende Transporteinrichtungen wie beispielsweise angetrieben umlaufende Transportbänder. Die Transportbänder müssen unterschiedlichen Anforderungen genügen.

### Aufgabe und Vorteile der Erfindung

Aufgabe der vorliegenden Erfindung ist es, bei einleitend genannten Prozessen bzw. Anordnungen und Vorrichtungen die Zuverlässigkeit zu erhöhen. Insbesondere soll der Transport von Gegenständen bzw. Werkstücken mit einem Transportband zuverlässig und mit vergleichsweise geringem Aufwand realisierbar sein, beispielsweise um eine Oberflächenbearbeitung von metallischen Werkstücken bei kontinuierlichen Prozessen mit hoher Bearbeitungsqualität gewährleisten zu können.

Diese Aufgabe wird durch Anspruch 1 gelöst.

Die abhängigen Ansprüche betreffen vorteilhafte Weiterbildungen der Erfindung.

Die Erfindung geht aus von einem Transportband-Material zur Bereitstellung eines bewegbaren Transportbandes, auf welches Gegenstände zum Transport auflegbar sind. Ein solches Transportband-Material wird insbesondere zur Herstellung von flexiblen insbesondere umlaufend antreibbaren Transportbändern verwendet. Das Transportband-Material ist im Betriebseinsatz sowohl durch den auf das Transportband wirkenden Antrieb als auch durch die im Zusammenhang der Bearbeitung des aufgelegten Werkstücks wirkenden Kräfte und Momente dauerhaften mechanischen Beanspruchungen ausgesetzt.

Der Kern der Erfindung liegt darin, dass eine zur Auflage von Gegenständen vorgesehene Auflageseite des Transportband-Materials auf Basis eines Gel-Elastomers gebildet ist. Vorteilhafterweise lassen sich damit verschiedenste vorteilhafte Eigenschaften für die Bereitstellung eines Materials für ein bewegbares Transportband erzielen, auf dem Gegenstände zum Transport und zum Beispiel zur Bearbeitung in einem kontinuierlichen Arbeitsprozess aufgelegt werden.
Dabei ist es überraschend, dass die bislang bei Transportbändern für metallische Werkstücke nicht im Zusammenhang gesehene Materialgruppe der Gel-Elastomere praxistauglich einsetzbar und vorteilhaft ist.

Denn bisher sind Materialien von Auflageseiten von Transportbändern im diskutierten technischen Umfeld mit einer festen Oberfläche im Einsatz.

Gel-Elastomere sind überraschenderweise für betreffende Transportband-Materialien vorteilhaft geeignet, insbesondere äußerst zuverlässig und langlebig nutzbar. Insbesondere zeichnen sich Gel-Elastomere durch vergleichsweise hohe Werte bezüglich Adhäsion bzw. Hafteigenschaften für einen auflegbaren Gegenstand aus. Die Haltefunktion des Transportbandes für das aufgelegte Werkstück ist eine wesentliche Voraussetzung bei Prozessen beim Bearbeiten von mit Vorschub bewegten Werkstücken. Eine Auflageseite mit einem Gel-Elastomer stellt über die gesamte Gel-Elastomer-Fläche richtungsunabhängig eine hohe Haltekraft für das darauf aufliegende Werkstück bereit. Für die Wirksamkeit mit einer hohen Haltekraft reicht in der Regel bereits der Druckkontakt auf das Gel-Elastomer aus, der durch das Eigengewicht des aufgelegten Gegenstandes wirkt bzw. aufgrund der Masse des Werkstücks wirksam ist.

Für die erfindungsgemäße Ausbildung der Auflageseite ist es grundlegend, dass die Klebe- bzw. Haftfähigkeit des Gel-Elastomers voll zur Wirkung kommt. Eine Ab- oder Überdeckung des Gel-Elastomers, beispielsweise mit einem weiteren Material wie zum Beispiel einer Folie oder anderen Elementen, ist erfindungsgemäß ausgeschlossen bzw. soll auf jeden Fall unterbleiben, insbesondere um die Klebewirkung des Gel-Elastomers nicht einzuschränken bzw. in irgendeiner Weise zu reduzieren.

Außerdem ist es vorteilhaft, dass das Gel-Elastomer durch seine zwar vergleichsweise geringe Formveränderlichkeit bzw. durch seine geringe Nachgiebigkeit sich in einem gewissen Maß an die Oberfläche des aufgelegten Werkstücks anpasst bzw. anschmiegt. Dadurch wird die Haltewirkung des Gel-Elastomers bzw. des Transportbandes auf das Werkstück weiter erhöht. Eine gegebenenfalls dabei stattfindende oberflächliche Formveränderung der in einem unbelasteten Grundzustand ansonsten glatten Oberfläche des Gel-Elastomers bildet sich nach dem Abnehmen des Werkstücks vorteilhaft von selbst und in kurzer Zeit wieder zurück, was auf eine vorteilhafte Eigenschaft von Gel-Elastomeren gemäß einer Formgedächtniseigenschaft zurückzuführen ist. Damit steht bei einem erfindungsgemäß gebildeten Transportband das Gel-Elastomer mit einer glatten Oberseite für eine Auflage eines nächsten Werkstücks beliebig oft wiederholend in der ursprünglichen Form zur Verfügung.

Auch ist es bei Gel-Elastomeren vorteilhaft möglich, das Gel-Elastomermaterial auf einer Seite eines anderen Materials wie z. B. eines Trägers des Transportband-Materials derart aufzubringen, dass das Gel-Elastomer fest und dauerhaft auch bei Belastungen auf eine freie Oberfläche des Gel-Elastomers mit dem Träger beispielsweise aus einem Gummimaterial verbunden bleibt.

Bisher kommen zum Fixieren von Gegenständen wie Werkstücken auf dem Transportband gänzlich andere und vergleichsweise äußerst aufwändige Lösungen zum Einsatz, wie zum Beispiel Magnetisierungsvorrichtungen zum Halten des Werkstücks mit Magnetkräften und/oder Saugeinrichtungen bzw. Vakuumanordnungen zum Ansaugen des Werkstücks an eine Auflage des Transportbandes. Beide Ansätze weisen technische und wirtschaftliche Nachteile auf, zum Beispiel sind nicht alle metallische Werkstücke durch Magnetwirkung fixierbar bzw. es sind zusätzliche Anstrengungen konstruktiver Art und HilfsAggregate notwendig sowie eine dazugehörige Energieverbrauch zu berücksichtigen.

Demgegenüber sind Gel-Elastomere vorteilhaft, neben dem wirtschaftlichen Vorteil sind geringe Material- und Energieeinsätze nötig. Zudem sind Gel-Elastomere mechanisch unempfindlich zum Beispiel bei Belastungen durch Stoß oder Druck.

Des Weiteren lassen sich Gel-Elastomere auf einfache Weise von partikulären Anhaftungen bzw. anderen Verschmutzungen befreien bzw. ohne weitere Hilfsmittel durch Abspülen zum Beispiel mit Wasser sehr gut abwaschen und damit in einen Ausgangs- bzw. Neuzustand bringen. Vorteilhafterweise kann somit einer allmählich nachlassenden Hafteigenschaft der mit dem Gel-Elastomer gebildeten Auflageseite durch angelagerte Verschmutzungen mit geringem Aufwand entgegenwirkt werden. Dies kann kontinuierlich oder in Reinigungsphasen erfolgen.

Ein Gel-Elastomer weist außerdem hervorragende Ablöseeigenschaften auf, so dass ein aufgelegtes metallisches Werkstück nach einem Transport bzw. nach einer Bearbeitung mittels des bewegbaren Transportbandes ohne weiteres wieder davon ablösbar ist. Dabei trennt sich der Gegenstand vom Gel-Elastomer vorteilhaft, ohne dass auch nur Spuren des Gel-Elastomers am Gegenstand haften bleiben.

Das Gel-Elastomer ist erfindungsgemäß über die gesamte Fläche der Auflageseite des Transportband-Materials oder auf Teilbereichen der Gesamtfläche der Auflageseite vorhanden.

Das Transportband-Material mit dem Gel-Elastomer ist als flexibles Flächengebilde ausgebildet, wobei das Gel-Elastomer durch seine Flexibilität vorteilhafterweise die räumlichen Veränderungen bzw. Formgebungen des Transportbandes, die in der Praxis auftreten, mitmacht, ohne dass das Gel-Elastomer sich in seinen Eigenschaften verändert. Beispielsweise wird ein Transportband im Einsatz bei Transporteinrichtungen von z. B. Schleifmaschinen schleifenförmig um Antriebs- und/oder Umlenkwalzen geführt. Das Transportband ist vorzugsweise vergleichsweise dünn und ist im Wesentlichen einheitlich über die gesamte Erstreckung ausgebildet.

Bei einem Transportband mit dem erfindungsgemäßen Transportband-Material kann im Nutzbetrieb des Transportbandes beispielsweise bei einer Oberflächen-Bearbeitungsmaschine eine Bearbeitung des auf dem Transportband aufliegenden Werkstücks problemlos erfolgen, ohne dass eine Positionsveränderung des aufgelegten Werkstücks relativ zum Transportband erfolgt, da hohe Adhäsionskräfte durch das Gel-Elastomer auf das Werkstück wirken.

Gemäß einer besonders vorteilhaften Variante ist die zur Auflage von Gegenständen vorgesehene Auflageseite des Transportband-Materials auf Basis eines Polyurethan-Gel-Elastomers gebildet.

Ein Polyurethan-Gel-Elastomer ist bezüglich nahezu sämtlicher oben genannter vorteilhaften Eigenschaften des Gel-Elastomers weiter verbessert gegenüber anderen Gel-Elastomeren. Ein Polyurethan-Gel-Elastomer-Werkstoff steht als handelsübliches Produkt z. B. mit der Handelsbezeichnung Pur-Gelen zur Verfügung. Die Herstellung der Auflageseite mit dem vorgeschlagenen Transportband-Material auf Basis von Polyurethan-Gel-Elastomer ist damit vorteilhaft möglich.

Erfindungsgemäß ist die Auflageseite ausschließlich als eine Gel-Elastomer-Schicht bzw. als eine Schicht auf Basis eines Gel-Elastomers bzw. eines Polyurethan-Gel-Elastomers ausgebildet. Vorzugsweise ist die Auflageseite komplett als Gel-Elastomer-Schicht bzw. als Polyurethan-Gel-Elastomer-Schicht gebildet. Die Gel-Elastomer-Schicht ist vorzugsweise integraler Bestandteil des Transportband-Materials bzw. bildet oberflächlich eine gesamte Oberfläche bzw. Außenseite des Transportband-Materials. Die Materialschicht aus Gel-Elastomer weist insbesondere eine einheitliche bzw. gleichbleibende Ausbildung über ihre gesamte Erstreckung auf. Die Dicke der Gel-Elastomer-Schicht liegt vorzugsweise gleichbleibend im Millimeterbereich, zum Beispiel im Bereich von vorzugsweise wenigen Millimetern bis über circa 5 oder bis circa 10 Millimeter.

Weiter ist es vorteilhaft, dass die Auflageseite als eine Beschichtung eines Trägermaterials mit einem Beschichtungsmaterial ausgebildet ist, wobei das Beschichtungsmaterial auf einem Gel-Elastomer basiert. Damit besteht die Beschichtung aus einem Material, das auf Basis eines Gel-Elastomers wie eines Polyurethan-Gel-Elastomers gebildet ist. Das Transportband-Material ist vorteilhaft als Zweischichtmaterial oder als Mehrschichtmaterial mit mehr als zwei Schichten gestaltet. Durch die unterschiedlichen Schichten können unterschiedliche Materialien für die jeweilige Schicht ausgewählt und damit zu einem Verbund verschiedener Materialschichten vereinigt werden. Die technologischen Eigenschaften des Transportband-Materials bzw. des Schicht-Verbundes sind damit vorgebbar und hängen von den Eigenschaften der einzelnen verwendeten Materialschichten ab. Damit lässt sich ein individuelles Anforderungsprofil, welche an das Transportband-Material gestellt wird, ohne weiteres erfüllen. Die Gel-Elastomer-Schicht bildet jeweils die äußere Auflageseite-Schicht. Es lassen sich mit dem Mehrschichtkonzept unterschiedliche Transportband-Materialien bzw. jeweils dazugehörigen Eigenschaften bereitstellen. Vorzugsweise können unterschiedliche Schichtdicken aus unterschiedlichen Materialien und in unterschiedlicher Abfolge im Gesamtverbund bereitgestellt werden.

Diese Vorgehensweise ist zudem im Hinblick auf die Herstellung des Transportband-Materials vorteilhaft.

Es ist erfindungsgemäß, dass das Transportband-Material eine Trägerschicht aus einem Trägerschicht-Material umfasst. Das Trägermaterial ist vorteilhafterweise aus einem mechanisch vergleichsweise stabilen flexiblen bzw. robustem Material gebildet, zum Beispiel aus einem Material das verschleißarm und zugstabil ist. Als Trägerschicht-Material kommen verschiedene Materialien in Frage, insbesondere ein Kunststoffmaterials wie z. B. ein Elastomermaterial, das beispielsweise auf einem Gummimaterial und/oder einem Textilmaterial basiert.

Es ist auch vorteilhaft, dass das Trägerschicht-Material ein Verbundmaterial umfasst. Damit kann eine Basis des Transportbandes mechanisch, chemisch und thermisch stabil ausgebildet werden. Beispielsweise kann ein Grundmaterial aus einem flexiblen Material wie einem Kautschuk bzw. Gummimaterial bestehen, in dem ein weiteres Material vorhanden bzw. eingebettet ist. Das weitere Material, zum Beispiel ein Gewebe aus einem textilen oder metallischen Material, kann das Transportband insbesondere mechanisch stabilisieren bzw. verstärken bzw. zur Formbeständigkeit beitragen.

Eine weitere vorteilhafte Modifikation der Erfindung zeichnet sich dadurch aus, dass das Transportband-Material zweilagig ist und eine Materiallage aus einem Trägermaterial und eine weitere Materiallage auf Basis des Gel-Elastomers bzw. des Polyurethan-Gel-Elastomers aufweist. Jede Materiallage ist vorzugsweise eine für sich einheitlich gebildete Schicht eines Zweischichtverbundes, wobei alle Lagen mit benachbarten Lagen fest verbunden sind.

Nach einer alternativen vorteilhaften Ausgestaltung der Erfindung weist das Transportband-Material mehr als zwei Materiallagen auf. Damit können insbesondere die technischen Eigenschaften des Transportbandes erweitert bzw. individuell an die geforderten Eigenschaften genau abgestimmt angepasst werden.

Weiter wird vorgeschlagen, dass gemäß einer vorteilhaften Ausführung der Erfindung eine Dicke der Materiallage auf Basis des Gel-Elastomers zumindest annähernd eine Dicke der Materiallage des Trägermaterials aufweist. Damit wird ein kompaktes und vorteilhaft wirksames Transportband-Material bereitstellbar.

Die Erfindung erstreckt sich auf ein Transportband mit einer Auflageseite zur Auflage von Gegenständen, welche mit dem Transportband im Nutzbetrieb des Transportbandes bewegbar sind, wobei das Transportband aus einem Transportband-Material gemäß einer der oben genannten Ausbildungen gebildet ist. Das Transportband ist insbesondere durch ein vorzugsweise schleifenförmig geschlossenes Band aus einem streifenförmigen Teil aus dem Transportband-Material gebildet. Das Transportband kann aber auch als ein hin- und herbewegbar antreibbares Transportband gestaltet sein.

Vorzugsweise ist das Transportband umlaufend antreibbar als Förderband, Laufband, Auflageband, Endlosband bzw. Umlaufband ausgebildet. Das Transportband ist insbesondere bei Vorrichtungen wie Maschinen zur Bearbeitung von Oberflächen von metallischen Werkstücken vorteilhaft einsetzbar. Mit der außenseitigen Auflageseite des Transportbandes auf Basis eines Gel-Elastomers wie einem Polyurethan-Gel-Elastomer können insbesondere flache metallische Werkstücke vorteilhafterweise sicher positioniert und verrutschsicher auf dem Transportband gehalten werden. Insbesondere ist es möglich, dass die aufliegenden Werkstücke durch von außen auf das Werkstück einwirkende Kräfte bei der Bearbeitung durch Bearbeitungswerkzeuge ihre Auflageposition nicht verändern bzw. nicht verrutschen bzw. sich nicht vom Transportband lösen. Denn das Gel-Elastomer übt eine ausreichend hohe Adhäsionswirkung auf das Werkstück aus, so dass das Werkstück auf dem Transportband lösbar fixiert ist.

Die Erfindung erstreckt sich auf eine Bearbeitungsvorrichtung zur Oberflächenbearbeitung von metallischen Werkstücken mit einem angetrieben bewegbaren Transportband, auf dem Gegenstände zur Bearbeitung auflegbar sind, wobei ein Transportband wie oben erläutert vorgesehen ist. Damit können vorzugsweise Metallbearbeitungsvorrichtungen, die beispielsweise im Trockenbearbeitungsverfahren zur Oberflächenbearbeitung von metallischen Werkstücken arbeiten, vorteilhaft ausgebildet werden. Das Transportband ist insbesondere umlaufend antreibbar, was über einen Antrieb beispielsweise über eine Antriebswalze oder dergleichen erfolgen kann.

Insbesondere sind Vorrichtungen zur beidseitigen Bearbeitung von metallischen Werkstücken mit entsprechenden Transportbändern vorteilhaft ausrüstbar. Dabei kommen vorzugsweise ein oberes antreibbares Transportband bei der Bearbeitung einer ersten Oberflächenseite des Werkstücks und ein unteres antreibbares Transportband bei der Bearbeitung einer zweiten Oberflächenseite des Werkstücks zum Einsatz, wobei beide Transportbänder eine Auflageseite auf Basis eines Gel-Elastomers insbesondere auf Basis eines Polyurethan-Gel-Elastomers aufweisen.

Es ist dabei vorteilhaft, dass das Gel-Elastomer sich an eine Oberflächenseite des Werkstücks, welche auf der Auflageseite kontaktierend aufliegt, haftend anpasst, womit eine vergleichsweise hohe Haftwirkung bzw. Klebewirkung zum Festhalten des Werkstücks am Transportband realisiert ist.

### Figurenbeschreibung

Weitere Merkmale und Vorteile der Erfindung sind anhand von schematisierten erfindungsgemäßen Ausführungsbeispielen näher erläutert. Im Einzelnen zeigt:
- Figur 1: ein erfindungsgemäßes Transportband von der Seite,
- Figur 2: das Transportband gemäß Figur 1 von oben,
- Figur 3: das Transportband gemäß der Figuren 1 und 2 in perspektivischer Ansicht schräg von oben,
- Figur 4: das Transportband gemäß der Figuren 1 bis 3 von vorne mit einem angedeuteten Werkstück, wobei ein Bereich A teilweise geschnitten dargestellt ist,
- Figur 5: den Bereich A aus Figur 4 vergrößert und
- Figur 6: eine schematisierte erfindungsgemäße Vorrichtung mit zwei erfindungsgemäßen Transportbändern gemäß der Figuren 1 bis 5 perspektivisch schräg von oben.

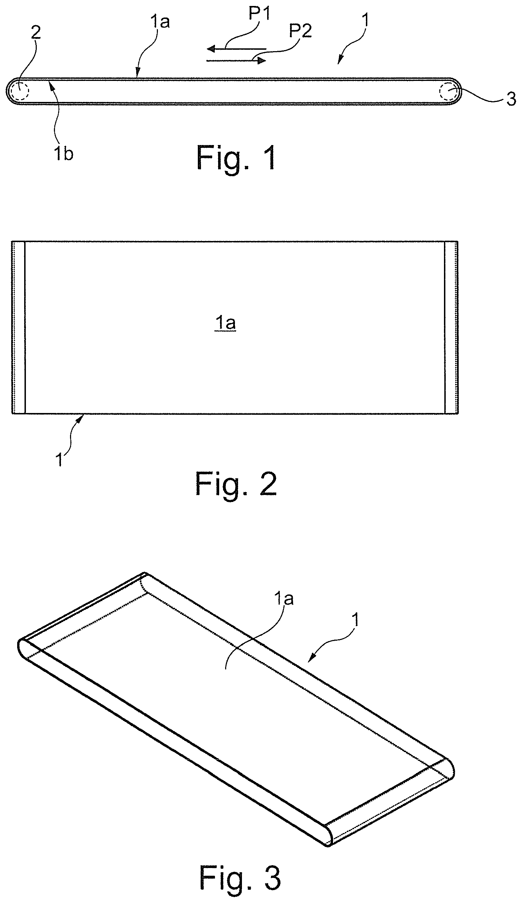

Ein erfindungsgemäßes Transportband 1 gemäß der Figuren 1 bis 5 ist aus einem zum Beispiel rechteckigen bzw. streifenförmigen erfindungsgemäßen Transportband-Material hergestellt. Das flächige Streifengebilde ist zur Bildung des Transportbandes 1 mit seinen gegenüberliegenden kürzeren Rändern bzw. an gegenüberliegenden Stirnseiten bzw. an Schmalseiten stumpf oder etwas überlappend verbunden, womit das Transportband 1 als geschlossene Bandschleife mit einer außenseitigen flächigen Auflageseite 1a gebildet ist.

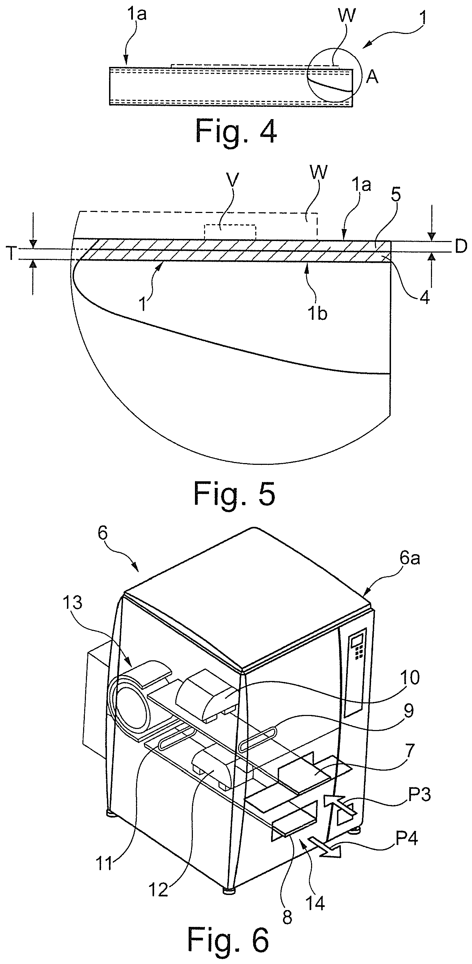

Das Transportband 1 ist in Figur 1 in horizontaler Ausrichtung und in einer Form dargestellt, die das Transportband 1 in einem Nutzzustand beispielsweise in einer Vorrichtung 6 bzw. Bearbeitungsmaschine gemäß Figur 6 einnimmt. Demgemäß ist das Transportband 1 gespannt und außen um zwei voneinander beabstandete Umlenkbereiche mit einem übereinstimmenden Radius geschlungen. Die beiden Umlenkbereiche sind nur in Figur 1 lediglich angedeutet gezeigt und durch zwei Umlenkwalzen 2 und 3 mit identischem Durchmesser gebildet. Der Durchmesser der Umlenkwalzen 2, 3 bestimmt einen vertikalen Abstand zwischen einem oberen und einem unteren Bandbereich des Transportbandes 1, wobei die beiden Bandbereiche parallel und horizontal ausgerichtet sind.

Eine der Umlenkwalzen 2, 3 ist um ihre zentrale Drehachse von einem motorischen Antrieb antreibbar und dient somit als Antriebswalze, wobei eine Antriebsmoment von der Antriebswalze auf das Transportband 1 aufbringbar ist. Je nach Drehrichtung der Antriebswalze ist das Transportband 1 zum Beispiel bezogen auf den oberen Bandbereich in horizontaler Richtung bzw. in eine Vorschubrichtung P1 oder in entgegengesetzter Richtung P2 antreibbar. Der untere Bandbereich zwischen den Umlenkwalzen 2 und 3 läuft in jeweils zur Vorschubrichtung des oberen Bandbereichs entgegengesetzter horizontaler Richtung.

Zum Antrieb, zur Umlenkung und zur Führung des Transportbandes 1 ist jeweils ein Abschnitt einer der Auflageseite 1a gegenüberliegenden flächigen Innenseite 1b des Transportbandes 1 in einem umschlingenden zum Beispiel reibschlüssigen Anlagekontakt mit einem Teil einer umfänglichen Außenseite der beiden Umlenkwalzen 2 und 3.

Das Transportband 1 umfasst einen inneren bzw. innenliegenden Träger, welche eine Trägerschicht 4 aus einem Trägerschicht-Material umfasst. Der flexible bzw. biegsam ausgebildete Träger ist insbesondere mechanisch robust bzw. weist eine vergleichsweise hohe Zugfestigkeit auf.

Das Trägerschicht-Material weist ein Grundmaterial aus beispielsweise Gummi- bzw. Kautschukwerkstoff auf. Zur Vorgabe von technologischen Eigenschaften des Trägers und damit des Transportbandes 1 kann das Trägerschicht-Material eine Verstärkung umfassen, beispielsweise eine weitere Komponente in dem Grundmaterial, wie eine Einlage z. B. ein Gewebe aus einem Textilmaterial und/oder aus einem Kunststoff- oder Metallmaterial.

Oberseitig bzw. auf einer Beschichtungsseite des Trägermaterials 4 schließt sich die Auflageseite 1a an, die eine Materialschicht 5 auf Basis eines Gel-Elastomers vorzugsweise auf Basis eines Polyurethan-Gel-Elastomers umfasst bzw. aus Polyurethan-Gel-Elastomer besteht.

Die Materialschicht 5 bedeckt das Trägermaterial 4 vorzugsweise komplett als geschlossene Schicht bzw. als durchgehende Beschichtung mit einer einheitlichen Dicke D (s. Figur 5). Die Darstellung gemäß Figur 5 ist stark schematisiert, so dass die Dicke D auch deutlich geringer als eine Dicke T des Trägermaterials 4 sein kann.

In den Figuren 4 und 5 ist ebenfalls stark schematisiert ein flaches metallisches Werkstück W mit einer unterseitigen Vertiefung V angedeutet, wobei das Werkstück W mit seiner flachen Unterseite auf der Auflageseite 1a aufliegt und durch eine von der Materialschicht 5 bzw. dem Polyurethan-Gel-Elastomer bereitgestellten Haftwirkung bzw. durch entsprechende Adhäsionseffekte auf der Auflageseite 1a und damit auf dem Transportband 1 festgehalten ist.

Figur 6 zeigt schließlich Teile einer stark schematischen erfindungsgemäße Vorrichtung 6 mit einem transparent dargestellten Gehäuse 6a und einem antreibbaren bewegbaren oberen Transportband 7 und einem unteren antreibbaren gleichartigen Transportband 8, wobei die Transportbänder 7 und 8 entsprechend dem Transportband 1 mit einer auflageseitigen Gel-Elastomer-Schicht ausgebildet sind. Die Vorrichtung 6 ist beispielhaft als Trockenbearbeitungsmaschine bzw. als Maschine zur Oberflächenbearbeitung von metallischen Werkstücken im Trockenbearbeitungsverfahren ausgebildet.

Das obere motorisch antreibbare Transportband 7 dient bezogen auf die Vorrichtung 6 zur frontseitigen Aufnahme eines nicht dargestellten metallischen Werkstücks in horizontaler Richtung gemäß des Bewegungspfeils P3 auf einer Oberseite des Transportbandes 7 und zum linearen Weitertransport des aufgelegten Werkstücks in Vorschubrichtung des Transportbandes 7.

Die Vorrichtung 6 weist zwei obere motorisch antreibbare Bearbeitungseinheiten 9 und 10 zur Oberflächenbearbeitung des metallischen Werkstücks auf, wobei die jeweilige Bearbeitung beim Transport in Vorschubrichtung bei laufendem Transportband 7 erfolgt. Aufgrund der Gel-Elastomer-Beschichtung der Transportbänder 7, 8 ist eine bislang nötige weitere Anordnung zum Festhalten von Werkstücken auf den Transportbändern 7 und 8 bei der erfindungsgemäßen Vorrichtung 6 vorteilhafterweise entbehrlich.

Nach der hinteren Bearbeitungseinheit 10 an einem hinteren Ende des Transportbandes 7 löst sich das Werkstück selbsttätig vom nach unten um 180 Winkelgrade umgelenkten Transportband 7 und gelangt nach Durchlauf einer Wendeeinheit 13 auf eine Auflageseite des unteren Transportbandes 8, wobei das Werkstück so gewendet wird, dass das Werkstück mit der von den Bearbeitungseinheiten 9 und 10 bearbeiteten Seite auf der oberseitigen Auflageseite des Transportbandes 8 aufliegt. Durch untere motorisch angetriebene Bearbeitungseinheiten 11 und 12 wird das Werkstück auf der von den Bearbeitungseinheiten 9 und 10 nicht bearbeiteten Seite oberflächlich bearbeitet. Dies geschieht während das Werkstück in Vorschubrichtung des Transportbandes 8 entgegen der Vorschubrichtung des oberen Transportbandes 7 linear bewegt wird. An einem Ausgabebereich 14 vorne an der Vorrichtung 6 erfolgt die Entnahme des allseitig oberflächlich bearbeiteten Werkstücks gemäß Richtung P4.

Mit der Vorrichtung 6 wird die gesamte Oberfläche des metallischen Werkstücks schleifend bearbeitet, insbesondere derart abgeschliffen, dass Oxid- bzw. Schmutzschichten und Schlackereste entfernt und Kanten des Werkstücks verrundet werden.

### Bezugszeichenliste:

- 1: Transportband
- 1a: Auflageseite
- 1b: Innenseite
- 2: Umlenkwalze
- 3: Umlenkwalze
- 4: Trägerschicht
- 5: Materialschicht
- 6: Vorrichtung
- 6a: Gehäuse
- 7: Transportband
- 8: Transportband
- 9-12: Bearbeitungseinheit
- 13: Wendeeinheit
- 14: Ausgabebereich

## Patentansprüche

1. Metallbearbeitungsvorrichtung zur Oberflächenbearbeitung von metallischen Werkstücken,
mit einem angetrieben bewegbaren Transportband (1, 7, 8), auf dem metallische Werkstücke zur Bearbeitung auflegbar sind, wobei das Transportband (1, 7, 8) eine Auflageseite (1a) zur Auflage der metallischen Werkstücke auf dem Transportband (1, 7, 8), welche mit dem Transportband (1, 7, 8) bewegbar sind, aufweist, und
das Transportband (1, 7, 8) aus einem Transportband-Material zur Bereitstellung eines bewegbaren Transportbandes (1, 7, 8) gebildet ist,
wobei das Transportband-Material eine Trägerschicht (4) aus einem Trägermaterial umfasst, wobei die zur Auflage von metallischen Werkstücken vorgesehene Auflageseite (1a) des Transportband-Materials die Auflageseite (1a) des Transportbandes (1,7,8) bildet, **dadurch gekennzeichnet, dass** die Auflageseite (1a) auf Basis eines Gel-Elastomers gebildet ist, wobei eine Ab- oder Überdeckung des Gel-Elastomers ausgeschlossen ist, und wobei die Auflageseite (1a) ausschließlich als eine Gel-Elastomer-Schicht gebildet ist, die eine gleichbleibende Ausbildung über ihre gesamte Erstreckung aufweist, wobei das Gel-Elastomer über die gesamte Fläche der Auflageseite (1a) des Transportband-Materials oder auf Teilbereichen der Gesamtfläche der Auflageseite (1a) vorhanden ist.

2. Metallbearbeitungsvorrichtung nach Anspruch 1, **dadurch gekennzeichnet, dass** die zur Auflage von Gegenständen vorgesehene Auflageseite (1a) des Transportband-Materials auf Basis eines Polyurethan-Gel-Elastomers gebildet ist.

3. Metallbearbeitungsvorrichtung nach Anspruch 1 oder 2, **dadurch gekennzeichnet, dass** die Auflageseite (1a) als eine Beschichtung eines Trägermaterials mit einem Beschichtungsmaterial ausgebildet ist, wobei das Beschichtungsmaterial auf einem Gel-Elastomer basiert.

4. Metallbearbeitungsvorrichtung nach einem der vorhergehenden Ansprüche, **dadurch gekennzeichnet, dass** das Trägerschicht-Material ein Verbundmaterial umfasst.

5. Metallbearbeitungsvorrichtung nach einem der vorhergehenden Ansprüche, **dadurch gekennzeichnet, dass** das Transportband-Material zweilagig ist und eine Materiallage aus einem Trägermaterial und eine weitere Materiallage auf Basis des Gel-Elastomers aufweist.

6. Metallbearbeitungsvorrichtung nach einem der vorhergehenden Ansprüche, **dadurch gekennzeichnet, dass** das Transportband-Material mehr als zwei Materiallagen aufweist.

7. Metallbearbeitungsvorrichtung nach einem der vorhergehenden Ansprüche, **dadurch gekennzeichnet, dass** eine Dicke der Materiallage auf Basis des Gel-Elastomers zumindest annähernd eine Dicke der Materiallage des Trägermaterials aufweist.

## Claims

1. Metal processing device for processing the surfaces of metals workpieces, comprising a driven movable conveyor belt (1, 7, 8) on which metal workpieces can be placed for processing, wherein the conveyor belt (1, 7, 8) has a supporting side (1a) for supporting the metal workpieces on the conveyor belt (1, 7, 8) which can be moved by the conveyor belt (1, 7, 8) and the conveyor belt (1, 7, 8) is made from a conveyor belt material to provide a movable conveyor belt (1, 7, 8), wherein the conveyor belt material comprises a substrate layer (4) made from a substrate material, wherein the supporting side (1a) of the conveyor belt material provided for supporting metal workpieces forms the supporting side (1a) of the conveyor belt (1, 7, 8),
**characterised in that** the supporting side (1a) is formed on the basis of a gel elastomer, wherein a cover or covering of the gel elastomer is excluded, and wherein the supporting side (1a) is made exclusively as a gel elastomer layer, which has a consistent form over its whole extension, wherein the gel elastomer is provided over the whole surface of the supporting side (1a) of the conveyor belt material or on portions of the whole surface of the supporting side (1a).

2. Metal processing device according to claim 1, **characterised in that** the supporting side (1a) of the conveyor belt material provided for supporting objects is formed on the basis of a polyurethane gel elastomer.

3. Metal processing device according to claim 1 or 2, **characterised in that** the supporting side (1a) is designed as a coating of substrate material with a coating material, wherein the coating material is based on a gel elastomer.

4. Metal processing device according to any of the preceding claims, **characterised in that** the substrate material comprises a composite material.

5. Metal processing device according to any of the preceding claims, **characterised in that** the conveyor belt material has two layers and comprises one material layer made from a substrate material and one additional material layer based on the gel elastomer.

6. Metal processing device according to any of the preceding claims, **characterised in that** the conveyor belt material has more than two material layers.

7. Metal processing device according to any of the preceding claims, **characterised in that** a thickness of the material layer on the basis of the gel elastomer has at least approximately a thickness of the material layer of the substrate material.

## Revendications

1. Dispositif d'usinage de métaux pour le traitement de surface de pièces métalliques,
avec une bande de transport (1, 7, 8) mobile par entraînement sur laquelle peuvent être placées des pièces métalliques en vue de leur traitement, la bande de transport (1, 7, 8) étant munie d'une face de pose (1a) pour poser les pièces métalliques sur la bande de transport (1, 7, 8), lesquelles sont mobiles avec la bande de transport (1, 7, 8), et
la bande de transport (1, 7, 8) est constituée d'un matériau de bande de transport pour fournir une bande de transport mobile (1, 7, 8),
le matériau de bande de transport comprenant une couche support (4) en un matériau support, la face de pose (1a) du matériau de bande de transport prévue pour poser des pièces métalliques constituant la face de pose (1a) de la bande de transport (1, 7, 8), **caractérisé en ce que** la face de pose (1a) est formée à base d'un gel élastomère, un recouvrement ou un chevauchement du gel élastomère étant exclu, et la face de pose (1a) étant formée exclusivement sous la forme d'une couche de gel élastomère qui présente une forme constante sur toute son étendue, le gel élastomère étant présent sur toute la surface de la face de pose (1a) du matériau de la bande de transport ou sur des zones partielles de la surface totale de la face de pose (1a).

2. Dispositif d'usinage de métaux selon la revendication 1, **caractérisé en ce que** la face de pose (1a) du matériau de la bande de transport prévue pour poser des objets est formée à base d'un gel élastomère en polyuréthane.

3. Dispositif d'usinage de métaux selon la revendication 1 ou 2, **caractérisé en ce que** la face de pose (1a) est réalisée sous la forme d'un revêtement d'un matériau support avec un matériau de revêtement, le matériau de revêtement étant à base d'un gel élastomère.

4. Dispositif d'usinage de métaux selon l'une des revendications précédentes, **caractérisé en ce que** le matériau de la couche support comprend un matériau composite.

5. Dispositif d'usinage de métaux selon l'une des revendications précédentes, **caractérisé en ce que** le matériau de la bande de transport est bicouche et comprend une couche de matériau constituée d'un matériau support et une autre couche de matériau à base du gel élastomère.

6. Dispositif d'usinage de métaux selon l'une des revendications précédentes, **caractérisé en ce que** le matériau de la bande de transport comprend plus de deux couches de matériau.

7. Dispositif d'usinage de métaux selon l'une des revendications précédentes, **caractérisé en ce qu'**une épaisseur de la couche de matériau à base du gel élastomère est au moins approximativement égale à une épaisseur de la couche de matériau du matériau support.
